# FASCICULE DE BREVET EUROPEEN

(11) **EP 2 639 143 B1**
(45) Date de publication et mention de la délivrance du brevet: **20.01.2016**
(21) Numéro de dépôt: 13156272.0
(22) Date de dépôt: 22.02.2013
(51) Int. Cl.: B62H 3/00, E05B 71/00, B62H 3/02

(54) **Système automatique de stockage de cycles et poste de verrouillage de cycle pour un tel système**
Automatisches System zur Fahrradlagerung, und Fahrradverriegelungstation für ein solches System
Automatic system for storing cycles and cycle-locking station for such a system

(30) Priorité: 12.03.2012 FR 1252200
(43) Date de publication de la demande: 18.09.2013
(73) Titulaire: JCDecaux SA, 92200 Neuilly-Sur-Seine (FR)
(72) Inventeur: Ardouin, Thierric, 78340 Les Clayes sous Bois (FR); Zeferino, Emmanuel, 78180 Montigny le Bretonneux (FR)
(74) Mandataire: Cabinet Plasseraud

(56) Documents cités:
- EP-A1- 2 338 779
- FR-A1- 2 905 927
- US-A1- 2011 226 709

## Description

### DOMAINE DE L'INVENTION

La présente invention est relative aux systèmes automatiques de stockage de cycles et aux postes de verrouillage de cycles pour de tels systèmes.

Plus particulièrement, l'invention concerne un système automatique de stockage de cycles comprenant :
- une pluralité de cycles (par exemple des bicyclettes) comportant chacun un organe de verrouillage,
- une pluralité de postes de verrouillage adaptés pour recevoir chacun un cycle,
- au moins un système de commande adapté pour commander le poste de verrouillage,
ledit poste de verrouillage incluant :
- une structure incluant une gâche ouverte selon une direction d'engagement et adaptée pour recevoir l'organe de verrouillage d'un cycle par emboîtement dans ladite direction d'engagement,
- un organe de blocage rotatif entre d'une part, une position verrouillée où ledit organe de blocage est adapté pour bloquer l'organe de verrouillage du cycle dans la gâche et d'autre part, une position déverrouillée où l'organe de blocage est adapté pour permettre à l'organe de verrouillage du cycle d'entrer et sortir de la gâche dans la direction d'engagement, ledit organe de blocage comportant un bec de commande et un bec d'arrêt, le bec de commande étant adapté pour être repoussé par l'organe de verrouillage du cycle en faisant tourner l'organe de blocage de la position déverrouillée à la position verrouillée lorsque ledit organe de verrouillage du cycle est engagé dans la gâche dans la direction d'engagement et d'engagement et le bec d'arrêt étant adapté pour interférer avec l'organe de verrouillage du cycle en le bloquant dans la gâche dans la position verrouillée de l'organe de blocage,
- un mécanisme de commande de verrou comportant des première et deuxième bielles articulées entre elles par une première articulation, la première bielle étant articulée sur l'organe de blocage par une deuxième articulation et la deuxième bielle étant articulée, par une troisième articulation, sur la structure du poste de verrouillage,
le mécanisme de commande de verrou étant mobile entre une position de verrouillage où ledit mécanisme de commande de verrou place l'organe de blocage en position verrouillée et une position de déverrouillage où ledit mécanisme de commande de verrou place l'organe de blocage en position déverrouillée,
ledit mécanisme de commande de verrou comportant une partie de retenue qui est disposée pour, en position de verrouillage, être retenue par un dispositif de retenue solidaire de la structure du poste de verrouillage,
et le mécanisme de commande de verrou étant disposé pour qu'en position de déverrouillage, la première articulation soit dans une première position non alignée avec une droite passant par les deuxième et troisième articulations.

Un système de stockage de cycles tel que décrit ci-dessus peut être utilisé par exemple pour mettre des cycles à disposition du public, moyennant identification de l'emprunteur du cycle et éventuellement paiement d'une location.

### ARRIERE PLAN DE L'INVENTION

Le document FR2954265A décrit un exemple d'un tel système de stockage de cycles. Le document FR2905927 est considéré comme l'état de la technique le plus proche de l'objet des revendication 1 et 6.

### OBJETS DE L'INVENTION

La présente invention a notamment pour but de perfectionner les systèmes de ce type, notamment pour se prémunir contre les vols ou dégradations par arrachement des cycles des postes de verrouillage.

A cet effet, selon l'invention, un système automatique de stockage de cycles du genre en question est caractérisé en ce que le mécanisme de commande de verrou est disposé pour qu'en position de verrouillage, la première articulation soit dans une deuxième position non alignée avec ladite droite passant par les deuxième et troisième articulations, cette deuxième position étant située au-delà de ladite droite par rapport à la première position.

Grâce à ces dispositions, le mécanisme de commande de verrou est autobloquant (une traction exercée sur le cycle se traduit par un effort d'appui de la partie de retenue du mécanisme de commande de verrou contre le dispositif de retenue), de sorte que les cycles sont très solidement verrouillés sur les postes de verrouillage.

Dans différents modes de réalisation du système automatique de stockage de cycles selon l'invention, on peut éventuellement avoir recours en outre à l'une et/ou à l'autre des dispositions suivantes (utilisables éventuellement indépendamment les unes des autres et indépendamment des dispositions précitées) :
- le mécanisme de commande de verrou est sollicité élastiquement vers la position de déverrouillage, la partie de retenue du mécanisme de commande de verrou est une partie métallique et le dispositif de retenue comprend d'une part, un aimant permanent adapté pour attirer ladite partie de retenue et d'autre part, un actionneur de déverrouillage commandé par le système de commande et adapté pour repousser le mécanisme de commande de verrou de la position de verrouillage vers la position de déverrouillage en le décollant de l'aimant permanent ;
- le poste de verrouillage comporte en outre un actionneur de reverrouillage, commandé par le système de commande et adapté pour déplacer le mécanisme de commande de verrou de la position de déverrouillage jusqu'à la position de verrouillage ;
- le système de commande comporte au moins un capteur adapté pour détecter la présence d'un cycle verrouillé sur le poste de verrouillage, et le système de commande est adapté pour faire déplacer le mécanisme de commande de verrou en position de verrouillage par l'actionneur de reverrouillage, lorsque le capteur détecte la présence du cycle sur le poste de verrouillage au bout d'un temps prédéterminé après déplacement du mécanisme de commande de verrou, en position de déverrouillage ;
- chaque poste de verrouillage comporte un dispositif de stockage d'énergie électrique relié à un circuit d'alimentation électrique, chaque cycle comportant un dispositif de stockage d'énergie électrique relié à un circuit d'alimentation électrique, les circuits d'alimentation électrique du cycle et du poste de verrouillage étant adaptés pour permettre au dispositif de stockage d'énergie électrique du cycle de charger le dispositif de stockage d'énergie électrique du poste de verrouillage lorsque le cycle est verrouillé sur le poste de verrouillage.

Par ailleurs, l'invention a également pour objet une poste de verrouillage pour un système de stockage automatique de cycles tel que défini ci-dessus, adaptée pour verrouiller un cycle et incluant :
- une structure comportant une gâche ouverte selon une direction d'engagement et adaptée pour recevoir un organe de verrouillage d'un cycle par emboîtement dans ladite direction d'engagement,
- un organe de blocage rotatif entre d'une part, une position verrouillée où ledit organe de blocage est adapté pour bloquer l'organe de verrouillage du cycle dans la gâche et d'autre part, une position déverrouillée où l'organe de blocage est adapté pour permettre à l'organe de verrouillage du cycle d'entrer et sortir de la gâche dans la direction d'engagement, ledit organe de blocage comportant un bec de commande et un bec d'arrêt, le bec de commande étant adapté pour être repoussé par l'organe de verrouillage du cycle en faisant tourner l'organe de blocage de la position déverrouillée à la position verrouillée lorsque ledit organe de verrouillage du cycle est engagé dans la gâche dans la direction d'engagement et le bec d'arrêt étant adapté pour interférer avec l'organe de verrouillage du cycle en le bloquant dans la gâche dans la position verrouillée de l'organe de blocage,
- un mécanisme de commande de verrou comportant des première et deuxième bielles articulées entre elles par une première articulation, la première bielle étant articulée sur l'organe de blocage par une deuxième articulation et la deuxième bielle étant articulée, par une troisième articulation, sur la structure du poste de verrouillage,
le mécanisme de commande de verrou étant mobile entre une position de verrouillage où ledit mécanisme de commande de verrou place l'organe de blocage en position verrouillée et une position de déverrouillage où ledit mécanisme de commande de verrou place l'organe de blocage en position déverrouillée,
ledit mécanisme de commande de verrou comportant une partie de retenue qui est disposée pour, en position de verrouillage, être retenue par un dispositif de retenue solidaire de la structure du poste de verrouillage,
et le mécanisme de commande de verrou est disposé pour qu'en position de déverrouillage, la première articulation soit dans une première position non alignée avec une droite passant par les deuxième et troisième articulations,
caractérisé en ce que le mécanisme de commande de verrou est disposé pour qu'en position de verrouillage, la première articulation soit dans une deuxième position non alignée avec ladite droite passant par les deuxième et troisième articulations, cette deuxième position étant située au-delà de ladite droite par rapport à la première position.

### BREVE DESCRIPTION DES DESSINS

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique en perspective montrant un système automatique de stockage de cycles pouvant mettre en oeuvre l'invention,
- la figure 2 est une vue de détail montrant le verrouillage d'un cycle sur l'un des postes de verrouillage de cycles de la figure 1,
- les figures 3 et 4 sont des vues de détail en perspective montrant l'organe de verrouillage du cycle et la gâche correspondante du poste de verrouillage, vus selon deux directions opposées,
- les figures 5 et 6 sont des vues en coupe horizontale montrant le mécanisme de verrouillage appartenant au poste de verrouillage, respectivement en position de verrouillage et de déverrouillage,
- la figure 7 est un schéma bloc illustrant les composants électriques principaux du système de stockage de cycles des figures 1 à 6,
- les figures 8 et 9 sont des vues similaires respectivement aux figures 4 et 5, montrant le mécanisme de verrouillage du poste de verrouillage dans une deuxième forme de réalisation de l'invention, et
- la figure 10 est un schéma bloc du système automatique de stockage de cycles selon la deuxième forme de réalisation de l'invention.

### DESCRIPTION PLUS DETAILLEE

Sur les différentes figures, les mêmes références désignent des éléments identiques ou similaires.

### Première forme de réalisation

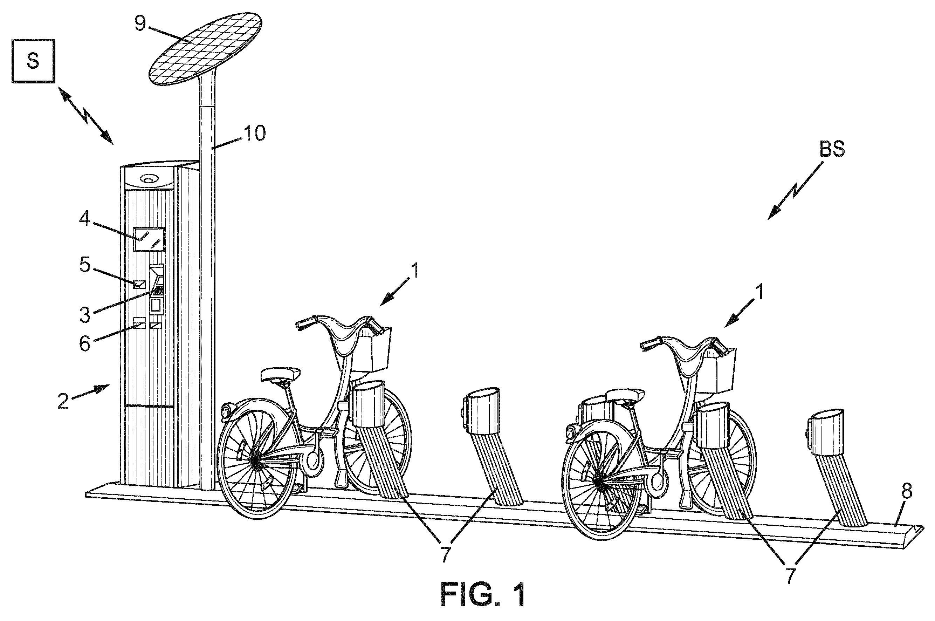

Comme représenté sur la figure 1, la présente invention concerne un système automatique de stockage de cycles 1 tels que notamment des bicyclettes, permettant par exemple de stocker des cycles sur la voie publique de façon à les mettre à disposition du public.

Ce système automatique de stockage de cycles peut comporter plusieurs stations BS de stockage de cycles, dont une est représentée sur la figure 1. Chaque station BS de stockage de cycles comprend un poste central de station 2, qui peut par exemple se présenter sous la forme d'une borne interactive dotée d'une interface utilisateur comprenant par exemple un clavier 3, un écran 4, un lecteur de cartes portatives électroniques 5, un dispositif 6 d'impression de tickets, etc.

La borne interactive 2 communique d'une part, avec le serveur central S qui gère les abonnements et les locations de cycles, et d'autre part, avec une pluralité de postes de verrouillage 7 qui permettent de verrouiller les cycles pendant leur stockage et qui peuvent par exemple se présenter sous la forme de bornes de verrouillage fixées au sol sur la voie publique.

Dans l'exemple représenté, les bornes de verrouillage 7 ainsi que la borne interactive 2 sont montées sur une ou des platines métalliques 8 qui fixées au sol sans excavation, ce qui facilite le montage de la station BS.

La station BS peut également comporter un panneau photovoltaïque 9 monté par exemple au sommet d'un poteau 10 fixé sur la platine 8.

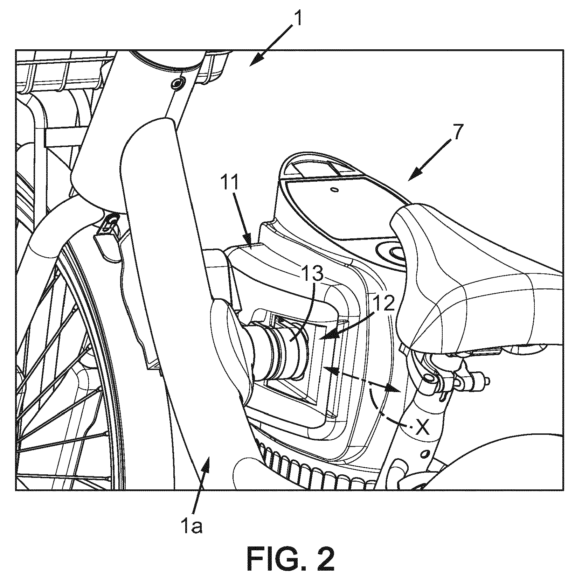

Comme on peut le voir sur la figure 2, chaque poste de verrouillage 7 comporte une gâche 11 formant un boîtier rigide qui fait partie de la structure du poste de verrouillage 7. La gâche 11 est dotée d'une ouverture 12 ouverte horizontalement dans une direction d'engagement X et est adaptée pour recevoir et retenir un organe de verrouillage 13 solidaire par exemple du cadre 1a du cycle 1.

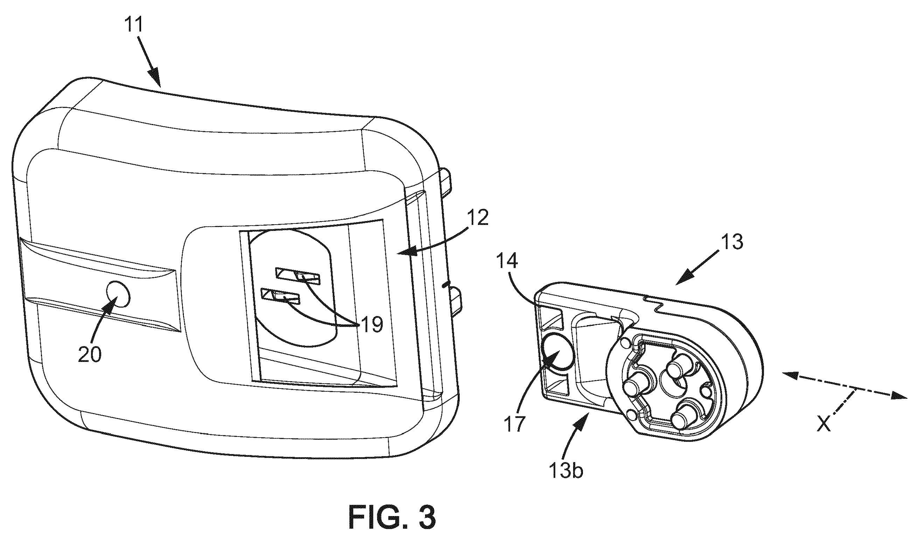

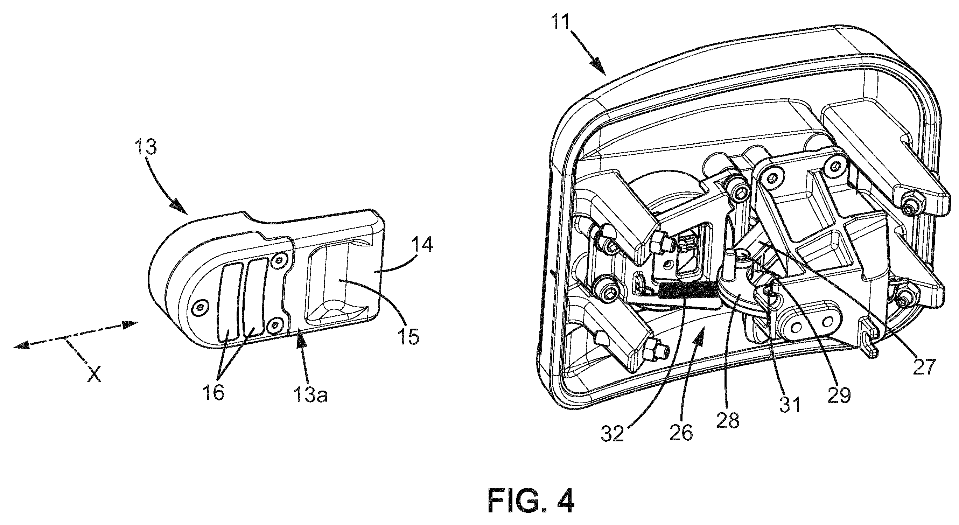

Comme on peut le voir sur les figures 3 et 4, l'organe de verrouillage 13 se présente sous la forme d'une platine métallique qui s'étend sensiblement horizontalement vers l'avant, dans une direction d'engagement X, à partir du cadre 1a du cycle, jusqu'à un bord vertical avant 14 épais. L'organe de verrouillage 13 comporte une première face 13a, qui est orientée vers la borne de verrouillage 7 (donc à l'opposé du cadre 1a du cycle), et qui, dans exemple représenté, présente un évidement 15 (non traversant dans l'exemple considéré ici) au voisinage du bord avant 14, ainsi que des contacts électriques 16, ici au nombre de deux. L'organe de verrouillage 13 comporte également une deuxième face 13b, à l'opposé de la première face 13 à, qui dans l'exemple représenté comporte un transpondeur 17 au voisinage du bord avant 14.

Comme représenté sur les figures 3 à 6, la gâche 11 de la borne de verrouillage peut comporter, dans l'exemple considéré ici :
- des contacts électriques 19 adaptés pour venir en appui sur les contacts électriques 16 de l'organe de verrouillage lorsque le cycle 1 est verrouillé sur le poste de verrouillage,
- ainsi qu'une interface de communication 20, en l'occurrence une antenne, adaptée pour interroger le transpondeur 17 de l'organe de verrouillage et recevoir la réponse de ce transpondeur.

Dans la gâche 11 est en outre monté un mécanisme de verrouillage 21, visible sur les figures 4 à 6, et qui est adapté pour sélectivement verrouiller et déverrouiller l'organe de verrouillage 13 du cycle sur le poste de verrouillage 7.

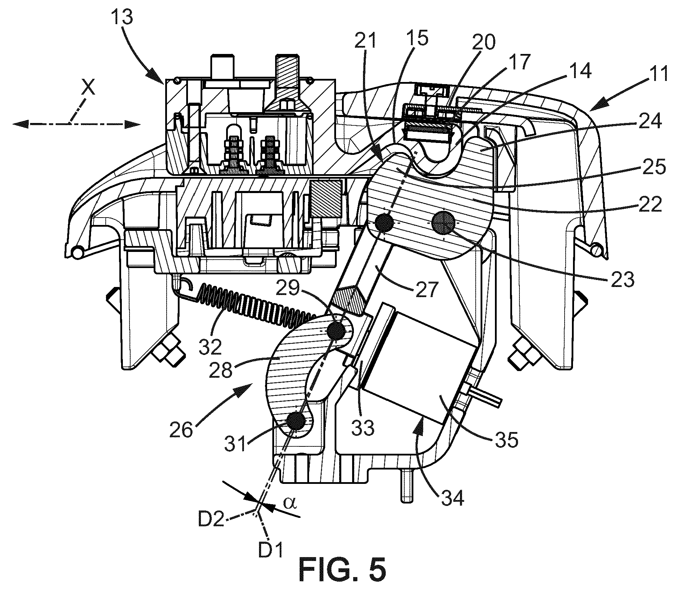

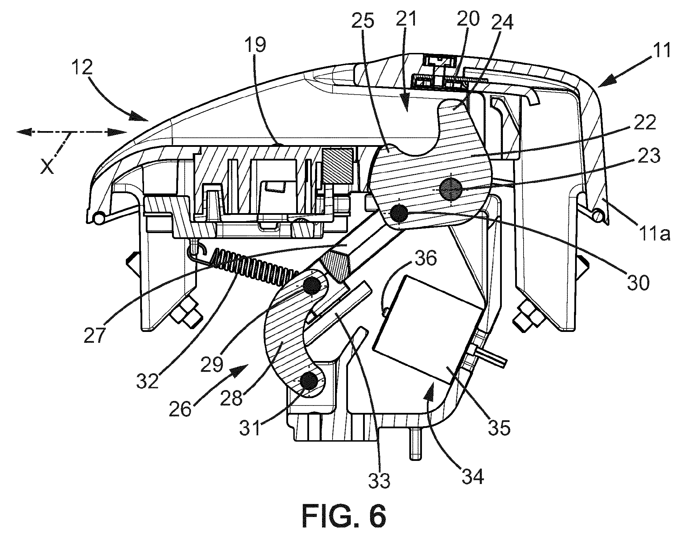

Ce mécanisme de verrouillage 21 inclut un organe de blocage 22 monté rotatif sur la gâche 11 autour d'un axe vertical 23, entre :
- d'une part, une position verrouillée (figure 5) où ledit organe de blocage est adapté pour bloquer l'organe de verrouillage 13 du cycle dans la gâche 11,
- et d'autre part, une position déverrouillée (figure 6) où l'organe de blocage est adapté pour permettre à l'organe de verrouillage du cycle d'entrer et sortir de la gâche dans la direction d'engagement.

Cet organe de blocage 22 comporte un bec de commande 24 éloigné de l'ouverture 12 de la gâche et un bec d'arrêt 25 plus proche de l'ouverture 12 de la gâche. Le bec de commande 24 est disposé pour être repoussé par le bord avant 14 de l'organe de verrouillage 13 du cycle en faisant tourner l'organe de blocage 22 de la position déverrouillée à la position verrouillée lorsque ledit organe de verrouillage 13 du cycle est engagé dans la gâche 11 dans la direction d'engagement X. Le bec d'arrêt 25 est adapté pour s'engager dans l'évidement 15 de l'organe de verrouillage 13 dans la position verrouillée de l'organe de blocage, en bloquant alors l'organe de verrouillage du cycle dans la gâche.

Le mécanisme de verrouillage 21 comporte en outre un mécanisme de commande de verrou 26 comportant des première et deuxième bielles 27, 28 articulées entre elles par une première articulation 29, la première bielle 27 étant articulée sur l'organe de blocage 22 par une deuxième articulation 30 et la deuxième bielle 28 étant articulée sur la gâche 11 une troisième articulation 31.

Le mécanisme de commande de verrou 26 est mobile entre une position de verrouillage (figure 5) où ledit mécanisme de commande de verrou place l'organe de blocage 22 en position verrouillée et une position de déverrouillage (figure 6) où ledit mécanisme de commande de verrou place l'organe de blocage 22 en position déverrouillée.

Ledit mécanisme de commande de verrou 26 est sollicité élastiquement vers la position de déverrouillage par un ressort 32 monté par exemple entre la gâche 11 et la première articulation comporte une partie de retenue 33 qui est disposée pour, en position de verrouillage, être retenue par un dispositif de retenue 34 solidaire de la gâche 11.

Ladite partie de retenue 33 du mécanisme de commande de verrou peut être une pièce métallique ferromagnétique (par exemple une pièce massive d'acier ou fer), solidaire par exemple de la première bielle 27 et voisine de la première articulation 29.

Le dispositif de retenue 34 peut comprendre par exemple :
- d'une part, un aimant permanent 35 adapté pour attirer ladite partie de retenue 33 qui vient ainsi se coller sur l'aimant 35 en position de verrouillage,
- et d'autre part, un actionneur de déverrouillage 36 (par exemple une tige poussoir actionnée par solénoïde) adapté pour sélectivement repousser le mécanisme de commande de verrou 26 de la position de verrouillage vers la position de déverrouillage en décollant la partie de retenue 33 de l'aimant permanent 35, suffisamment pour que le mécanisme de commande de verrou 26 puisse être déplacé par le ressort 32 jusqu'à la position de déverrouillage.

Le mécanisme de commande de verrou 26 est disposé pour que:
- en position de déverrouillage (figure 6), la première articulation 29 soit dans une première position, éloignée de l'aimant permanent 35, non alignée avec une droite passant par les deuxième et troisième articulations 30, 31,
- et en position de verrouillage (figure 5), la première articulation 29 soit dans une deuxième position également non alignée avec ladite droite D1 passant par les deuxième et troisième articulations 30, 31, mais cette deuxième position étant située au-delà de ladite droite par rapport à la première position (la droite D2 passant par les première et troisième articulations forme donc entre elles un angle α non nul.

De cette façon, le mécanisme de commande de verrou 26 est autobloquant, puisqu'une traction exercée sur le cycle se traduit par un effort d'appui de la partie de retenue 33 du mécanisme de commande de verrou contre le dispositif de retenue 34. Le cycle 1 est ainsi très solidement verrouillé sur le poste de verrouillage 7.

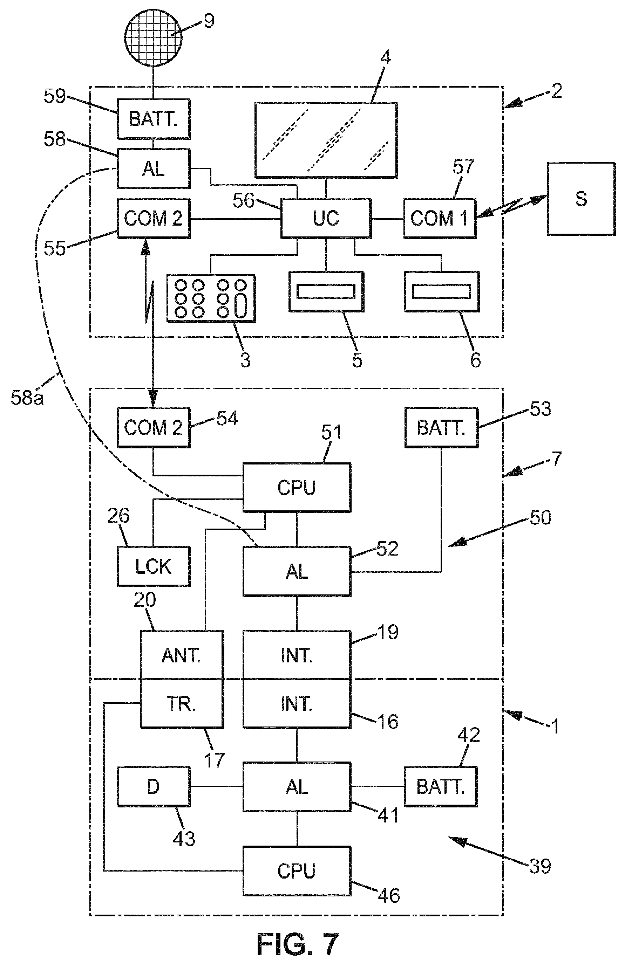

Comme représenté sur la figure 7, le circuit électrique 39 du cycle 1 peut comprendre par exemple au moins :
- une unité centrale électronique 46 (CPU) telle qu'un microprocesseur ou microcontrôleur, adaptée pour communiquer avec la poste de verrouillage 7,
- un circuit d'alimentation électrique 41 basse tension (AL) fonctionnant par exemple sous 6V ou 3V, qui alimente l'unité centrale électronique 46,
- une batterie 42 basse tension (BATT.) reliée au circuit d'alimentation électrique 41,
- un générateur électrique 43 (D) tel qu'une dynamo, par exemple une dynamo-moyeu qui peut être logée par exemple dans le moyeu du cycle pour générer du courant électrique lors du roulage du cycle, ce générateur électrique étant également relié au circuit d'alimentation électrique 41 pour charger la batterie 42 lors du roulage du cycle,
- les contacts électriques 16, formant une interface de connexion électrique (INT.),
- le transducteur 17, qui peut être connecté ou non à l'unité centrale 46.

Par ailleurs, chaque borne de verrouillage 7 peut comporter un circuit électrique 50 comprenant par exemple :
- une unité centrale électronique 51 (CPU) telle qu'un microprocesseur ou microcontrôleur,
- un circuit d'alimentation électrique 52 (AL) basse tension (fonctionnant à la même tension que le circuit d'alimentation électrique 41 du cycle, par exemple sous 3V ou 6V) alimentant l'unité centrale 51,
- la partie électrique du mécanisme de commande de verrou 26 (LCK), c'est-à-dire en pratique l'actionneur de déverrouillage 36, alimenté par le circuit d'alimentation électrique 52 et commandé par l'unité centrale 51,
- les contacts électriques 19 susmentionnés, formant une interface de connexion électrique (INT.),
- une batterie 53 (BATT.) alimentant le circuit 52 sous basse tension,
- une interface de communication sans fil 52 (COM 2) reliée à l'unité centrale 51 et permettant de communiquer avec la borne interactive 2 sous un protocole radio courte portée tels que les protocoles BLUETOOTH, ZIGBEE ou autres,
- éventuellement, divers accessoires reliés à l'unité centrale 51, par exemple un lecteur de carte sans contact, un ou des voyant(s), un bouton de commande de déverrouillage, etc, disposés par exemple sur la face supérieure de la borne 7.

Chaque borne de verrouillage 7 est de préférence autonome et n'est reliée à l'extérieur par aucun câble d'alimentation électrique et par aucun câble courant faible de transmission de données, ce qui facilite grandement l'installation des bornes 7. Eventuellement, un câble 58a, optionnel ou éventuellement temporaire, peut relier le circuit d'alimentation électrique 58 de la borne interactive 2 au circuit d'alimentation électrique de chaque borne de verrouillage 7, mais même dans ce cas la station BS dans son ensemble est autonome.

La borne interactive 2, quant à elle, peut comporter une unité centrale électronique 56 (UC) telle qu'un microprocesseur ou autre, qui communique avec :
- le clavier 3, l'écran 4, le lecteur de carte 5 et le dispositif d'impression 6 susmentionnés,
- un interface de communication sans fil 55 (COM 2) communiquant elle-même avec l'interface de communication 54 de chaque poste de verrouillage 7 et fonctionnant sous le même protocole de communication que celle-ci,
- une interface de communication 57 (COM 1), par exemple un MODEM GPRS ou autre, adaptée pour communiquer avec le serveur central S,
- le circuit d'alimentation électrique 58 susmentionné, relié à une batterie 59 chargée par le panneau photovoltaïque 9.

Le système qui vient d'être décrit fonctionne comme suit.

Lorsqu'un utilisateur veut emprunter un cycle 1 sur l'une des bornes de verrouillage 7, il peut par exemple insérer une carte électronique portative dans le lecteur 5 de la borne interactive 2 puis rentrer un code secret correspondant à cette carte, au moyen du clavier 3, de façon à s'identifier auprès de ladite borne interactive. Après avoir vérifié les droits de l'utilisateur avec le serveur S, la borne interactive 2 donne une autorisation de verrouillage à l'une des bornes de verrouillage 7, de façon que l'utilisateur puisse déverrouiller le cycle 1 en place sur cette borne, par exemple en appuyant sur un bouton prévu sur cette borne, ce qui provoque la commande de l'actionneur de déverrouillage 36 par l'unité centrale 51 pour faire passer le mécanisme de commande 26 en position de déverrouillage. L'utilisateur peut alors prendre le cycle 1, et l'unité centrale électronique 51 de la borne de verrouillage repère alors l'enlèvement du cycle 1 puisqu'elle ne peut plus communiquer avec le transpondeur 17 de ce cycle. L'unité centrale électronique 51 de la borne de verrouillage 7 informe alors la borne interactive 2 de cet enlèvement.

Lorsque l'utilisateur rend le cycle 1 et le met en place sur une borne de verrouillage 7, il engage l'organe de verrouillage 13 dans la gâche 11 de la borne de verrouillage. Au cours de ce mouvement, l'organe de verrouillage 13 fait pivoter l'organe de blocage 22 comme expliqué précédemment, qui passe en position verrouillée (figure 5), et les contacts électriques 16 du cycle sont connectés aux contacts électriques 19 de la gâche 11.

Le circuit d'alimentation électrique 41 du cycle 1 alimente alors le circuit d'alimentation 52 de la borne de verrouillage 7 par l'intermédiaire des contacts 16, 19, et les deux circuits sont conçus pour que la batterie 42 du cycle, précédemment chargée par la dynamo 43 du cycle, puisse ainsi recharger la batterie 53 de la borne 7, ce qui, combiné avec la faible consommation électrique de la borne 7, permet l'autonomie susmentionnée de la borne 7.

L'unité centrale électronique 51 de la borne de verrouillage peut éventuellement également communiquer avec l'unité centrale électronique 23 du cycle par l'intermédiaire d'au moins certains des contacts 19.

### Deuxième forme de réalisation

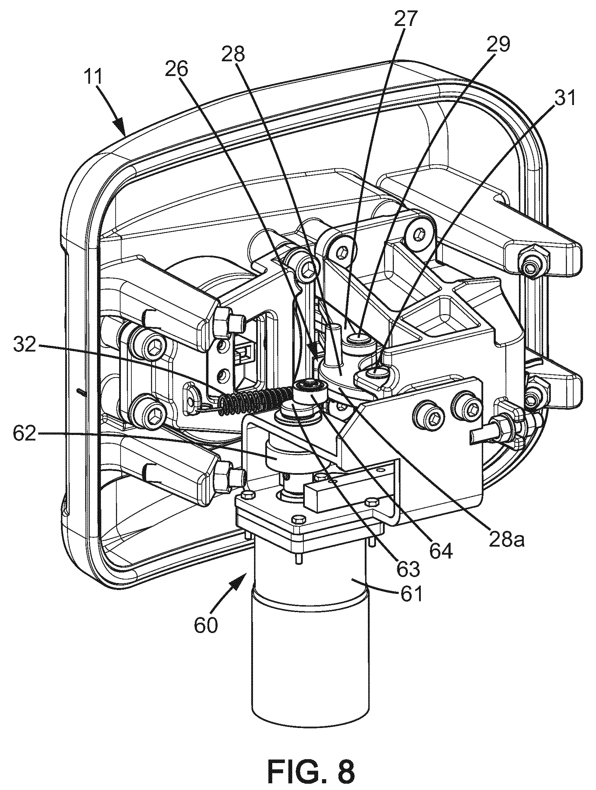

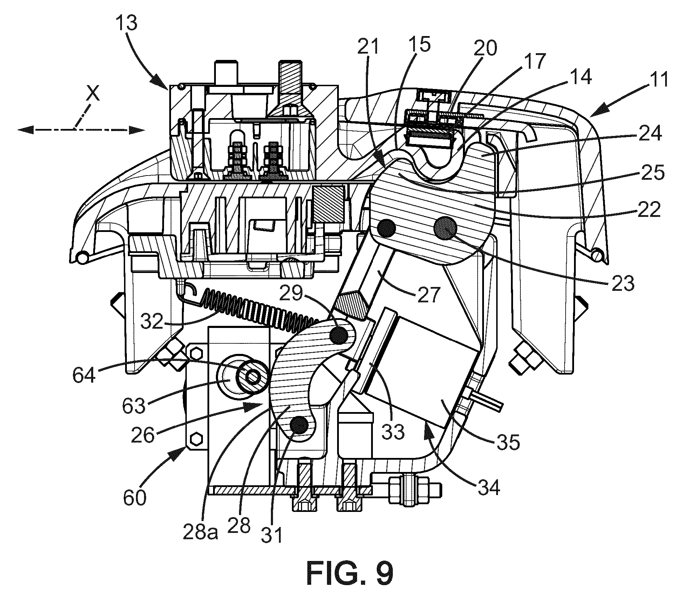

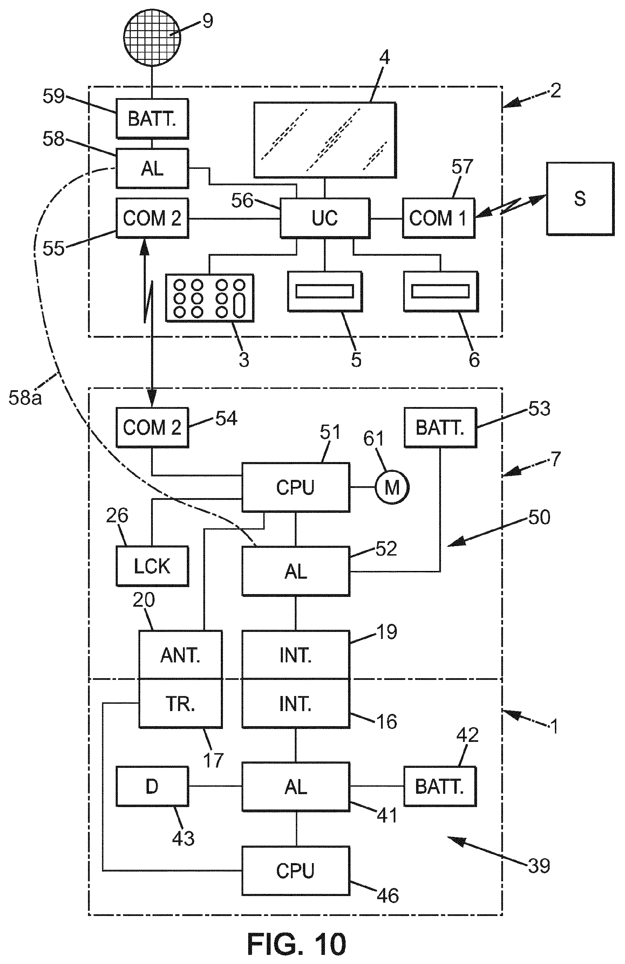

La deuxième forme de réalisation de l'invention, représentée sur les figures 8 à 10, est similaire à la première forme de réalisation décrite ci-dessus, de sorte que cette deuxième forme de réalisation ne sera pas décrite à nouveau en détail.

Ladite deuxième forme de réalisation de l'invention se distingue uniquement de la première forme de réalisation par le fait que la borne de verrouillage 7 comporte en outre un actionneur de reverrouillage 60 motorisé, dont le moteur électrique 61 (M) est commandé par l'unité centrale 51 de la borne de verrouillage. Cet actionneur de reverrouillage, qui est fixé à la structure de la gâche 11, peut comporter par exemple le moteur 61, un réducteur 62 et un excentrique 63 pourvu le cas échéant d'un galet 64 qui roule contre un bord 28a de la deuxième bielle 28 de façon à pouvoir repousser ladite bielle 28, et tout le mécanisme de commande de verrou 26, de la position de déverrouillage à la position de verrouillage.

Ainsi, lorsque l'unité centrale 51 de la borne 7 repère la présence du cycle 1 au bout d'un temps prédéterminé (par exemple 30 s) après déplacement du mécanisme de commande de verrou 26, en position de déverrouillage, elle fait déplacer le mécanisme de commande de verrou 26 en position de verrouillage par l'actionneur de reverrouillage 60, ce qui reverrouille le cycle sur la borne 7 et évite que le cycle ne soit ensuite volé.

## Revendications

1. Système automatique de stockage de cycles comprenant :
- une pluralité de cycles (1) comportant chacun un organe de verrouillage (13),
- une pluralité de postes de verrouillage (7) adaptés pour recevoir chacun un cycle (1),
- au moins un système de commande (S,2,51) adapté pour commander le poste de verrouillage (7),
ledit poste de verrouillage incluant :
- une structure incluant une gâche (11) ouverte selon une direction d'engagement (X) et adaptée pour recevoir l'organe de verrouillage (13) d'un cycle par emboîtement dans ladite direction d'engagement (X),
- un organe de blocage (22) rotatif entre d'une part, une position verrouillée où ledit organe de blocage est adapté pour bloquer l'organe de verrouillage (13) du cycle dans la gâche (11) et d'autre part, une position déverrouillée où l'organe de blocage est adapté pour permettre à l'organe de verrouillage du cycle d'entrer et sortir de la gâche dans la direction d'engagement (X), ledit organe de blocage comportant un bec de commande (24) et un bec d'arrêt (25), le bec de commande (24) étant adapté pour être repoussé par l'organe de verrouillage (13) du cycle en faisant tourner l'organe de blocage (22) de la position déverrouillée à la position verrouillée lorsque ledit organe de verrouillage du cycle est engagé dans la gâche (11) dans la direction d'engagement (X) et le bec d'arrêt (25) étant adapté pour interférer avec l'organe de verrouillage (13) du cycle en le bloquant dans la gâche (11) dans la position verrouillée de l'organe de blocage,
- un mécanisme de commande de verrou (26) comportant des première et deuxième bielles (27,28) articulées entre elles par une première articulation (29), la première bielle (27) étant articulée sur l'organe de blocage (22) par une deuxième articulation (30) et la deuxième bielle (28) étant articulée, par une troisième articulation (31), sur la structure du poste de verrouillage,
le mécanisme de commande de verrou (26) étant mobile entre une position de verrouillage où ledit mécanisme de commande de verrou place l'organe de blocage (22) en position verrouillée et une position de déverrouillage où ledit mécanisme de commande de verrou place l'organe de blocage (22) en position déverrouillée,
ledit mécanisme de commande de verrou comportant une partie de retenue (33) qui est disposée pour, en position de verrouillage, être retenue par un dispositif de retenue (34) solidaire de la structure du poste de verrouillage,
et le mécanisme de commande de verrou (26) étant disposé pour qu'en position de déverrouillage, la première articulation (29) soit dans une première position non alignée avec une droite (D1) passant par les deuxième et troisième articulations (30,31),
**caractérisé en ce que** le mécanisme de commande de verrou (26) est disposé pour qu'en position de verrouillage, la première articulation (29) soit dans une deuxième position non alignée avec ladite droite (D1) passant par les deuxième et troisième articulations (30,31), cette deuxième position étant située au-delà de ladite droite (D1) par rapport à la première position.

2. Système selon la revendication 1, dans lequel le mécanisme de commande de verrou (26) est sollicité élastiquement vers la position de déverrouillage, la partie de retenue (33) du mécanisme de commande de verrou est une partie métallique et le dispositif de retenue (34) comprend d'une part, un aimant permanent (35) adapté pour attirer ladite partie de retenue et d'autre part, un actionneur de déverrouillage (36) commandé par le système de commande et adapté pour repousser le mécanisme de commande de verrou (26) de la position de verrouillage vers la position de déverrouillage en le décollant de l'aimant permanent.

3. Système selon la revendication 1 ou la revendication 2, dans lequel le poste de verrouillage (7) comporte en outre un actionneur de reverrouillage (60), commandé par le système de commande et adapté pour déplacer le mécanisme de commande de verrou (26) de la position de déverrouillage jusqu'à la position de verrouillage.

4. Système selon la revendication 3, dans lequel le système de commande comporte au moins un capteur (20) adapté pour détecter la présence d'un cycle (1) verrouillé sur le poste de verrouillage (7), et le système de commande est adapté pour faire déplacer le mécanisme de commande de verrou (26) en position de verrouillage par l'actionneur de reverrouillage, lorsque le capteur détecte la présence du cycle sur le poste de verrouillage au bout d'un temps prédéterminé après déplacement du mécanisme de commande de verrou, en position de déverrouillage.

5. Système selon l'une quelconque des revendications précédentes, dans lequel chaque poste de verrouillage (7) comporte un dispositif de stockage d'énergie électrique (53) relié à un circuit d'alimentation électrique (52), chaque cycle comportant un dispositif de stockage d'énergie électrique (42) relié à un circuit d'alimentation électrique (41), les circuits d'alimentation électrique du cycle et du poste de verrouillage étant adaptés pour permettre au dispositif de stockage d'énergie électrique (42) du cycle de charger le dispositif de stockage d'énergie électrique (53) du poste de verrouillage lorsque le cycle est verrouillé sur le poste de verrouillage.

6. Poste de verrouillage (7) pour un système de stockage automatique de cycles selon l'une quelconque des revendications précédentes, adaptée pour verrouiller un cycle et incluant :
- une structure comportant une gâche (11) ouverte selon une direction d'engagement (X) et adaptée pour recevoir un organe de verrouillage (13) d'un cycle par emboîtement dans ladite direction d'engagement,
- un organe de blocage (22) rotatif entre d'une part, une position verrouillée où ledit organe de blocage est adapté pour bloquer l'organe de verrouillage (13) du cycle dans la gâche et d'autre part, une position déverrouillée où l'organe de blocage (22) est adapté pour permettre à l'organe de verrouillage du cycle d'entrer et sortir de la gâche dans la direction d'engagement, ledit organe de blocage (22) comportant un bec de commande (24) et un bec d'arrêt (25), le bec de commande (24) étant adapté pour être repoussé par l'organe de verrouillage du cycle en faisant tourner l'organe de blocage de la position déverrouillée à la position verrouillée lorsque ledit organe de verrouillage du cycle est engagé dans la gâche dans la direction d'engagement et le bec d'arrêt (24) étant adapté pour interférer avec l'organe de verrouillage du cycle en le bloquant dans la gâche dans la position verrouillée de l'organe de blocage,
- un mécanisme de commande de verrou (26) comportant des première et deuxième bielles (27,28) articulées entre elles par une première articulation (29), la première bielle (27) étant articulée sur l'organe de blocage (22) par une deuxième articulation (30) et la deuxième bielle (28) étant articulée, par une troisième articulation (31), sur la structure du poste de verrouillage,
le mécanisme de commande de verrou (26) étant mobile entre une position de verrouillage où ledit mécanisme de commande de verrou place l'organe de blocage en position verrouillée et une position de déverrouillage où ledit mécanisme de commande de verrou place l'organe de blocage en position déverrouillée,
ledit mécanisme de commande de verrou (26) comportant une partie de retenue (33) qui est disposée pour, en position de verrouillage, être retenue par un dispositif de retenue (34) solidaire de la structure du poste de verrouillage,
et le mécanisme de commande de verrou (26) étant disposé pour qu'en position de déverrouillage, la première articulation (29) soit dans une première position non alignée avec une droite (D1) passant par les deuxième et troisième articulations,
**caractérisé en ce que** le mécanisme de commande de verrou est disposé pour qu'en position de verrouillage, la première articulation (29) soit dans une deuxième position non alignée avec ladite droite (D1) passant par les deuxième et troisième articulations, cette deuxième position étant située au-delà de ladite droite par rapport à la première position.

## Patentansprüche

1. Automatisches System zum Lagern von Fahrrädern, wobei das System aufweist:
- mehrere Fahrräder (1) mit jeweils einem Verriegelungselement (13),
- mehrere Verriegelungsstationen (7) zum Empfangen jeweils eines Fahrrads (1),
- mindestens ein Steuersystem (S,2,51) zur Steuerung der Verriegelungsstation (7),
wobei die Verriegelungsstation aufweist:
- eine Struktur mit einer zu einer Eingriffsrichtung (X) hin offenen Kappe (11) zur Aufnahme des Verriegelungselements (13) eines Fahrrads durch Einführen in Eingriffsrichtung (X),
- ein Klemmelement (22), das drehbar ist zwischen einerseits einer verriegelten Position, in welcher das Klemmelement das Verriegelungselement (13) des Fahrrads in der Kappe (11) festklemmen kann, und andererseits einer entriegelten Position, in welcher das Klemmelement ein Einführen bzw. Entfernen des Verriegelungselements des Fahrrads in Eingriffsrichtung (X) in die bzw. aus der Kappe erlaubt, wobei das Klemmelement einen Steuerungsnocken (24) und einen Sperrnocken (25) aufweist, wobei der Steuerungsnocken (24) konfiguriert ist, beim Einführen des Verriegelungselements des Fahrrads in Eingriffsrichtung in die Kappe (11) von dem Verriegelungselement (13) des Fahrrads gestoßen zu werden und dadurch eine Drehung des Klemmelements (22) aus der entriegelten Position in die verriegelte Position herbeizuführen, und der Sperrnocken (25) konfiguriert ist, mit dem Verriegelungselement (13) des Fahrrads zusammenzuwirken, um in der verriegelten Position des Klemmelements das Verriegelungselement (13) in der Kappe (11) festzuklemmen,
- einen Riegelsteuerungsmechanismus (26), der ein erstes und zweites Koppelglied (27,28) aufweist, die über ein erstes Gelenk (29) gelenkig miteinander verbunden sind, wobei das erste Koppelglied (27) über ein zweites Gelenk (30) gelenkig an dem Klemmelement (22) angebracht ist und das zweite Koppelglied (28) über ein drittes Gelenk (31) gelenkig an der Struktur der Verriegelungsstation angebracht ist,
wobei der Riegelsteuerungsmechanismus (26) bewegbar ist zwischen einer Verriegelungsposition, in welcher der Riegelsteuerungsmechanismus das Klemmelement (22) in eine verriegelte Position stellt, und einer Entriegelungsposition, in welcher der Riegelsteuerungsmechanismus das Klemmelement (22) in eine entriegelte Position stellt,
wobei der Riegelsteuerungsmechanismus ein Halteteil (33) aufweist, das angeordnet ist, um in der Verriegelungsposition von einer Haltevorrichtung (34), die mit der Struktur der Verriegelungsstation fest verbundenist, festgehalten zu werden, und
wobei der Riegelsteuerungsmechanismus (26) so angeordnet ist, dass in der Entriegelungsposition das erste Gelenk (29) in einer ersten Position ist, in welcher es nicht mit einer durch das zweite und dritte Gelenk (30,31) hindurchgehenden geraden Linie (D1) ausgerichtet ist,
**dadurch gekennzeichnet, dass** der Riegelsteuerungsmechanismus (26) so angeordnet ist, dass in der Verriegelungsposition das erste Gelenk (29) in einer zweiten Position ist, in welcher es nicht nur der durch das zweite und dritte Gelenk (30,31) hindurchgehenden geraden Linie (D1) ausgerichtet ist, wobei sich die zweite Position bezüglich der ersten Position jeweils der geraden Linie (D1) befindet.

2. System nach Anspruch 1, wobei der Riegelsteuerungsmechanismus (26) elastisch zur Entriegelungsposition hin gespannt ist, das Halteteil (33) des Riegelsteuerungsmechanismus ein Metallteil ist und die Haltevorrichtung (34) einerseits einen das Halteteil zu sich hinziehenden Permanentmagneten (35) und andererseits einen von dem Steuersystem gesteuerten Entriegelungsaktuator (36) aufweist, der den Riegelsteuerungsmechanismus (26) dadurch, dass er ihn von dem Permanentmagneten löst, aus der Verriegelungsposition in die Entriegelungsposition stoßen kann.

3. System nach Anspruch 1 oder Anspruch 2, wobei die Verriegelungsstation (7) außerdem einen von dem Steuersystem gesteuerten Wiederverriegelungsaktuator (60) zum Verschieben des Riegelsteuerungsmechanismus (26) aus der Entriegelungsposition in die Verriegelungsposition aufweist.

4. System nach Anspruch 3, wobei das Steuersystem mindestens einen Sensor (20) aufweist, der konfiguriert ist, eine Anwesenheit eines verriegelten Fahrrads an der Verriegelungsstation (7) zu detektieren, und wobei das Steuersystem konfiguriert ist, den Wiederverriegelungsaktuator zu veranlassen, den Riegelsteuerungsmechanismus (26) in eine Verriegelungsposition zu verschieben, in dem Fall, dass der Sensor die Anwesenheit des Fahrrads an der Verriegelungsstation am Ende einer vorgegebenen Zeitdauer nach Verschieben des Riegelsteuerungsmechanismus in die Entriegelungsposition detektiert.

5. System nach einem der vorstehenden Ansprüche, wobei jede Verriegelungsstation (7) eine mit einem elektrischen Stromkreis (52) verbundene Speichervorrichtung (53) zur Speicherung von elektrischer Energie aufweist und jedes Fahrrad eine mit einem elektrischen Stromkreis (41) verbundene Speichervorrichtung (42) zur Speicherung von elektrischer Energie aufweist, wobei der elektrische Schaltkreis des Fahrrads und derjenige der Verriegelungsstation konfiguriert sind, der Speichervorrichtung (42) des Fahrrads zu erlauben, die Speichervorrichtung (53) der Verriegelungsstation aufzuladen, wenn das Fahrrad an der Verriegelungsstation verriegelt ist.

6. Verriegelungsstation (7) für ein automatisches System zum Lagern von Fahrrädern nach einem der vorstehenden Ansprüche, wobei die Verriegelungsstation konfiguriert ist, ein Fahrrad zu verriegeln, und aufweist:
- eine Struktur mit einer zu einer Eingriffsrichtung (X) hin offenen Kappe (11) zur Aufnahme eines Verriegelungselements (13) eines Fahrrads durch Einführen in Eingriffsrichtung,
- ein Klemmelement (22), das drehbar ist zwischen einerseits einer verriegelten Position, in welcher das Klemmelement das Verriegelungselement (13) des Fahrrads in der Kappe (11) festklemmen kann, und andererseits einer entriegelten Position, in welcher das Klemmelement ein Einführen bzw. Entfernen des Verriegelungselements des Fahrrads in Eingriffsrichtung in die bzw. aus der Kappe erlaubt, wobei das Klemmelement einen Steuerungsnocken (24) und einen Sperrnocken (25) aufweist, wobei der Steuerungsnocken (24) konfiguriert ist, beim Einführen des Verriegelungselements des Fahrrads in Eingriffsrichtung in die Kappe von dem Verriegelungselement des Fahrrads gestoßen zu werden und dadurch eine Drehung des Klemmelements aus der entriegelten Position in die verriegelte Position herbeizuführen, und der Sperrnocken (24) konfiguriert ist, mit dem Verriegelungselement des Fahrrads zusammenzuwirken, um in der verriegelten Position des Klemmelements das Verriegelungselement in der Kappe festzuklemmen,
- einen Riegelsteuerungsmechanismus (26), der ein erstes und zweites Koppelglied (27,28) aufweist, die über ein erstes Gelenk (29) gelenkig miteinander verbunden sind, wobei das erste Koppelglied (27) über ein zweites Gelenk (30) gelenkig an dem Klemmelement (22) angebracht ist und das zweite Koppelglied (28) über ein drittes Gelenk (31) gelenkig an der Struktur der Verriegelungsstation angebracht ist,
wobei der Riegelsteuerungsmechanismus (26) bewegbar ist zwischen einer Verriegelungsposition, in welcher der Riegelsteuerungsmechanismus das Klemmelement in eine verriegelte Position stellt, und einer Entriegelungsposition, in welcher der Riegelsteuerungsmechanismus das Klemmelement in eine entriegelte Position stellt,
wobei der Riegelsteuerungsmechanismus (26) ein Halteteil aufweist, das angeordnet ist, um in der Verriegelungsposition von einer Haltevorrichtung (34), die integral mit der Struktur der Verriegelungsstation fest verbunden ist, festgehalten zu werden, und
wobei der Riegelsteuerungsmechanismus (26) so angeordnet ist, dass in der Entriegelungsposition das erste Gelenk (29) in einer ersten Position ist, in welcher es nicht mit einer durch das zweite und dritte Gelenk (30,31) hindurchgehenden geraden Linie (D1) ausgerichtet ist,
**dadurch gekennzeichnet, dass** der Riegelsteuerungsmechanismus so angeordnet ist, dass in der Verriegelungsposition das erste Gelenk (29) in einer zweiten Position ist, in welcher es nicht mit der durch das zweite und dritte Gelenk (30,31) hindurchgehenden geraden Linie (D1) ausgerichtet ist, wobei sich die zweite Position bezüglich der ersten Position jeweils der geraden Linie (D1) befindet.

## Claims

1. Automatic system for storing cycles comprising:
- a plurality of cycles (1), each having a locking element (13),
- a plurality of locking stations (7), each designed to receive a cycle (1),
- at least one control system (S, 2, 51) configured to control the locking station (7),
said locking station comprising:
- a structure incorporating a keeper (11) open in a direction of engagement (X) and designed to receive the locking element (13) of a cycle by an inserting movement in said direction of engagement (X),
- a blocking element (22) rotatable between a locked position in which said blocking element is configured to block the locking element (13) of the cycle in the keeper (11) on the one hand and an unlocked position in which the blocking element is configured to allow the locking element of the cycle to move into and out of the keeper in the direction of engagement (X) on the other hand, said blocking element comprising a control nose (24) and a stop nose (25), the control nose (24) being configured to be pushed by the locking element (13) of the cycle causing the blocking element (22) to be rotated from the unlocked position to the locked position when said locking element of the cycle is engaged in the keeper (11) in the direction of engagement (X) and the stop nose (25) being designed to interfere with the locking element (13) of the cycle so as to block it in the keeper (11) when the blocking element is in the locked position,
- a lock control mechanism (26) comprising first and second connecting rods (27, 28) articulated with one another by means of a first articulation (29), the first connecting rod (27) being articulated on the blocking element (22) by a second articulation (30) and the second connecting rod (28) being articulated by a third articulation (31) on the structure of the locking station, the lock control mechanism (26) being displaceable between a locked position in which said lock control mechanism places the blocking element (22) in a locked position and an unlocked position in which said lock control mechanism places the blocking element (22) in an unlocked position, said lock control mechanism comprising a retaining part (33) which is disposed so as to be retained by a retaining device (34) joined to the structure of the locking station when in the locked position,
and the lock control mechanism (26) being disposed so that, in the unlocked position, the first articulation (29) is in a first position out of alignment with a straight line (D) intersecting the second and third articulations (30, 31),
**characterised in that** the lock control mechanism (26) is disposed so that, in the locked position, the first articulation (29) is in a second position out of alignment with said straight line (D) intersecting the second and third articulations (30, 31), this second position being disposed beyond said straight line (D1) relative to the first position.

2. System as claimed in claim 1, wherein the lock control mechanism (26) is elastically biased towards the unlocked position, the retaining part (33) of the lock control mechanism is a metal part and the retaining device (34) comprises, on the one hand, a permanent magnet (35) designed to attract said retaining part and, on the other hand, an unlocking actuator (36) controlled by the control system and configured to push the lock control mechanism (26) from the locked position towards the unlocked position pulling it off the permanent magnet.

3. System as claimed in claim 1 or 2, wherein the locking station (7) further comprises a relocking actuator (60) controlled by the control system and configured to move the lock control mechanism (26) from the unlocked position into the locked position.

4. System as claimed in claim 3, wherein the control system comprises at least one sensor (20) configured to detect the presence of a cycle (1) locked to the locking station (7) and the control system is configured to command the lock control mechanism (26) to be moved into the locked position by the relocking actuator when the sensor detects the presence of the cycle on the locking station at the end of a predetermined time after the movement of the lock control mechanism into the unlocked position.

5. System as claimed in any one of the preceding claims, wherein each locking station (7) comprises an electric power storage device (53) connected to an electric power supply circuit (52), each cycle comprising an electric power storage device (42) connected to an electric power supply circuit (41), the electric power supply circuits of the cycle and the locking station being configured to allow the electric power storage device (42) of the cycle to charge the electric power storage device (53) of the locking station when the cycle is locked to the locking station.

6. Locking station (7) for an automatic cycle storage system as claimed in any one of the preceding claims, designed to lock a cycle and comprising:
- a structure comprising a keeper (11) open in a direction of engagement (X) and designed to receive the locking element (13) of a cycle by an inserting movement in said direction of engagement,
- a blocking element (22) rotatable between a locked position in which said blocking element is configured to block the locking element (13) of the cycle in the keeper (11) on the one hand and an unlocked position in which the blocking element (22) is configured to allow the locking element of the cycle to move into and out of the keeper in the direction of engagement on the other hand, said blocking element (22) comprising a control nose (24) and a stop nose (25), the control nose (24) being configured to be pushed by the locking element of the cycle causing the blocking element to be rotated from the unlocked position to the locked position when said locking element of the cycle is engaged in the keeper in the direction of engagement and the stop nose (24) being designed to interfere with the locking element of the cycle so as to block it in the keeper when the blocking element is in the locked position,
- a lock control mechanism (26) comprising first and second connecting rods (27, 28) articulated with one another by means of a first articulation (29), the first connecting rod (27) being articulated on the blocking element (22) by a second articulation (30) and the second connecting rod (28) being articulated by a third articulation (31) on the structure of the locking station, the lock control mechanism (26) being displaceable between a locked position in which said lock control mechanism places the blocking element in a locked position and an unlocked position in which said lock control mechanism places the blocking element in an unlocked position, said lock control mechanism (26) comprising a retaining part (33) which is disposed so as to be retained by a retaining device (34) joined to the structure of the locking station when in the locked position,
and the lock control mechanism (26) being disposed so that, in the unlocked position, the first articulation (29) is in a first position out of alignment with a straight line (D) intersecting the second and third articulations,
**characterised in that** the lock control mechanism is disposed so that, in the locked position, the first articulation (29) is in a second position out of alignment with said straight line (D) intersecting the second and third articulations, this second position being disposed beyond said straight line relative to the first position.
